(19) Europäisches Patentamt
European Patent Office
Office européen des brevets

(11) EP 0 759 049 B1

(12) EUROPÄISCHE PATENTSCHRIFT

(45) Veröffentlichungstag und Bekanntmachung des Hinweises auf die Patenterteilung:
**19.08.1998 Patentblatt 1998/34**

(21) Anmeldenummer: **95918623.0**

(22) Anmeldetag: **03.05.1995**

(51) Int Cl.[6]: **C08L 71/12**, C08L 53/00

(86) Internationale Anmeldenummer:
**PCT/EP95/01668**

(87) Internationale Veröffentlichungsnummer:
**WO 95/31503 (23.11.1995 Gazette 1995/50)**

(54) **MEHRPHASIGE POLYMERMISCHUNGEN**

MULTIPHASE POLYMER MIXTURES

MELANGES DE POLYMERES A PHASES MULTIPLES

(84) Benannte Vertragsstaaten:
**BE DE ES FR GB IT NL**

(30) Priorität: **13.05.1994 DE 4416854**

(43) Veröffentlichungstag der Anmeldung:
**26.02.1997 Patentblatt 1997/09**

(73) Patentinhaber: **BASF AKTIENGESELLSCHAFT**
**67056 Ludwigshafen (DE)**

(72) Erfinder:
- **GOTTSCHALK, Axel**
  **D-67435 Neustadt (DE)**
- **STADLER, Raimund**
  **D-55278 Mommenheim (DE)**
- **KRAPPE, Udo**
  **D-55118 Mainz (DE)**

(56) Entgegenhaltungen:
**EP-A- 0 099 062** **EP-A- 0 442 180**
**US-A- 3 833 687**

- **MACROMOLECULES, Bd.24, Nr.9, April 1991, WASHINGTON,DC,US Seiten 2231 - 2235 WON HO JO ET AL 'Compatibilising effect of a styrene-methylmethacrylate copolymer'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 759 049 B1

Printed by Jouve, 75001 PARIS (FR)

**Beschreibung**

Die vorliegende Erfindung betrifft mehrphasige Polymermischungen, enthaltend

a) ein Polymer (A) oder eine Mischung des Polymeren A mit bis zu 50 Gew.-% eines vinylaromatischen Polymeren
b) ein A-B-Blockcopolymer (B), aufgebaut aus einem Block A und einem elastischen Block B und
c) ein B-C-Blockcopolymer (C), aufgebaut aus einem elastischen Block B und einem Block C
d) sowie mindestens ein weiteres Polymer (D), welches von (A), (B) und (C) verschieden und mit dem Polymeren (A) unverträglich ist,

wobei die Blöcke A, B und C jeweils voneinander verschieden sind, das Polymer (A) mit dem Block A verträglich und mit dem Block C unverträglich ist, das Polymer (D) mit dem Block C verträglich und mit dem Block A unverträglich ist, wobei der Block B des AB-Blockcopolymeren struckturell sowohl identisch als auch verschiedenartig von dem Block B des BC-Blockcopolymeren sein kann, der elastische Block B eine Glastemperatur unterhalb von +20°C aufweist und die Blöcke A, B und C miteinander unverträglich sind.

Weiterhin betrifft die Erfindung die Verwendung dieser Formmassen zur Herstellung von Formkörpern jeglicher Art und die daraus erhältlichen Formkörper.

Polymermischungen, auch Polymerblends genannt, dienen im allgemeinen der Verbindung zweier unterschiedlicher Polymerer mit den jeweils wünschenswerten Eigenschaften der Einzelkomponenten, wobei möglichst die unerwünschten Eigenschaften kompensiert werden sollen. Auf diese Weise können mit neuen Blendzusammensetzungen andere Anwendungsgebiete erschlossen werden.

Jedoch zeigen makromolekulare Stoffe eine ausgeprägte Abneigung, sich mit anderen Polymeren zu vermischen, so daß Blendzusammensetzungen meist einen Verträglichkeitsvermittler enthalten.

Viele Probleme bei der Herstellung von Polymerblends aus mehreren, miteinander unverträglichen Polymeren entstehen durch eine unzureichende Phasenanbindung, d.h. Haftung zwischen den einzelnen Polymerphasen. Um eine bessere Phasenanbindung zu erreichen, werden den Mischungspartnern häufig Block- oder Pfropfcopolymere hinzugefügt. Bei den bisher bekannten Polymerblends ist die Phasenanbindung aber noch nicht voll befriedigend. Außerdem beobachtet man bei deren Verarbeitung das Entstehen von Hohlräumen an den Grenzen der einzelnen Polymerphasen, die ihre Ursache in den unterschiedlichen thermischen Ausdehnungskoeffizienten der Polymerphasen haben. Dies beeinträchtigt die mechanische Festigkeit, insbesondere die Zähigkeit und die Spannungsrißbeständigkeit der erhaltenen Polymerblends.

Weiterhin ist es bei der Herstellung von Polymerblends häufig schwierig, verschiedene Polymere in geeigneter Weise miteinander zu vermischen, da einige wichtige Polymere, beispielsweise Polyphenylenether (PPE) mit anderen Polymeren nur schwer verträglich sind. In solchen Fällen verwendet man häufig einen sogenannten Phasenvermittler, der die Mischbarkeit von zwei wenig verträglichen Polymeren verbessern soll. Aus der JP-A 01/054 052 ist in diesem Zusammenhang u.a. bekannt, ein Copolymer aus Styrol und Acrylnitril und/oder Methacrylat für PPE/ABS Blends zu verwenden. Die dabei erhaltenen Blends weisen aber eine unbefriedigende Zähigkeit sowie eine nicht ausreichende Spannungsrißbeständigkeit und Bindenahtfestigkeit auf.

Aus Macromolecules 1991, 24, 2231-2235, waren Untersuchungen des Phasenverhaltens von Blends aus Polyphenylenethern und Styrol-Acrylnitrilpolymeren, die als Verträglichkeitsvermittler Poly(styrol-b-methylmethacrylat) Blockcopolymere enthalten, bekannt.

Aus EP-A-0 442 180 sind mehrphasigen Polymermischungen aus PPE, modifiziertem PP und mindestens zwei Elastomeren bekannt, wobei ein Elastomer mit PPE verträglich, das andere mit PPE unverträglich und vorzugsweise mit PP verträglich ist.

In der jüngeren WO 93/03291 wurden als Phasenvermittler für unverträgliche Polymere A-B-C-Dreiblockcopolymere vorgeschlagen.

Aufgabe der vorliegenden Erfindung war es daher, mehrphasige Polymermischungen insbesondere aus wenig mischbaren Polymeren zur Verfügung zu stellen, die durch einen Verträglichkeitsvermittler mit möglichst vielen Polymeren gute Blendzusammensetzungen mit einer guten Phasenanbindung ergeben. Diese sollen sich durch eine gute Wärmeformbeständigkeit in Kombination mit einer sehr guten Zähigkeit (insbesondere multiaxialen Schlagzähigkeit) sowie Spannungsrißbeständigkeit und Bindenahtfestigkeit auszeichnen.

Demgemäß wurden die eingangs definierten mehrphasigen Polymermischungen gefunden.

Bevorzugte Mischungen dieser Art sowie ihre Verwendung sind den Unteransprüchen zu entnehmen.

Die erfindungsgemäßen Polymermischungen enthalten neben einem Polymeren (A) zwei Zweiblockcopolymere (B) und (C), welche aus einem Block A, einem elastischen Block B mit einer Glastemperatur unterhalb von +20°C, insbesondere unterhalb von 0°C und einem Block C bestehen, die jeweils voneinander verschieden sind. Bevorzugte mehrphasige Polymermischungen weisen einen solchen elastischen Block B auf, der aus einem Polymeren eines konjugierten Diens aufgebaut ist. Weiterhin enthalten die erfindungsgemäßen Polymermischungen noch mindestens

ein weiteres Polymer (D), welches von (A), (B) und (C) verschieden und mit dem Polymeren (A) unverträglich ist. Dabei ist es auch wesentlich, daß das Polymere (A) mit dem Block A verträglich und dem Block C unverträglich ist und das Polymere (D) mit dem Block C verträglich und mit dem Block A unverträglich ist sowie die Blöcke A, B und C miteinander unverträglich sind. Das Polymere (A) kann mit dem Block A strukturell sowohl identisch als auch verschiedenartig sein, sofern nur die Verträglichkeit gewährleistet ist. Ebenso kann das Polymere (D) mit dem Block C strukturell sowohl identisch als auch verschiedenartig sein, sofern auch hier die Verträglichkeit gegeben ist. Weiterhin kann der Block B des AB-Blockcopolymeren strukturell sowohl identisch als auch verschiedenartig mit dem B-Block des B-C-Blockcopolymeren sein, sofern auch hier die Verträglichkeit gegeben ist.

Die Wirkungsweise der A-B- bzw. B-C-Blockcopolymeren in den erfindungsgemäßen Polymermischungen beruht vor allem darauf, daß bei gleichzeitiger Haftung in den Polymeren (A) und (D) durch die Blöcke A und C eine weiche, elastische Zwischenphase in Gestalt von 2 Blöcken B ausgebildet wird. Die Verankerung im Polymer (A) erfolgt dabei durch die Verschlaufung dieses Polymeren mit dem Block A des einen Blockcopolymeren AB, die Haftung im Polymeren (D) bewirkt die Durchdringung mit dem Block C des anderen Blockcopolymeren B-C. Die weichen Zwischenphasen (Blöcke B) können dabei Spannungen zwischen den Phasengrenzflächen aufnehmen und sowohl zur Verbesserung der Mischbarkeit als auch zur Erhöhung der Schlagzähigkeit des Blends beitragen.

Die Frage, ob und unter welchen Bedingungen zwei Polymere mischbar, d.h. verträglich sind, kann häufig nur experimentell ermittelt werden.

Unter der Verträglichkeit zweier Polymerkomponenten versteht man im allgemeinen die Mischbarkeit der Komponenten oder die Neigung des einen Polymeren, sich in der anderen Polymerkomponente zu lösen (siehe B. Vollmert, Grundriß der makromolekularen Chemie, Band IV, S. 222 ff, E. Vollmert-Verlag 1979).

Zwei Polymere sind umso besser verträglich, je geringer die Differenz ihrer Löslichkeitsparameter ist. Derartige Parameter sowie die Mischungsenthalpie sind nicht einheitlich für alle Polymeren bestimmbar, so daß die Löslichkeit nur indirekt, z.B. durch Torsions-Schwingungs- oder DTA-Messungen bestimmbar ist, da bei Copolymeren die für die Einzelkomponenten charakteristischen Stufen entfallen.

Von einem mischbaren, d.h. verträglichen System aus zwei oder mehreren Polymeren kann zumindest dann ausgegangen werden, wenn dieses zumindest eines der folgenden Kriterien erfüllt:

- optische Klarheit
  Ein Film aus miteinander verträglichen Polymeren erscheint optisch klar, sind diese aber unverträglich, so erscheint der Film optisch trübe. Im Zweifelsfall kann eine elektronenmikroskopische Untersuchung den Grad der Klarheit ermitteln.

- Glastemperatur:
  Miteinander mischbare, d.h. verträgliche Polymere zeigen bei thermischen Belastungen (DTA- oder DSC-Messungen) nur eine Glastemperatur, die zwischen denen der Ausgangspolymeren liegt. Bei teilverträglichen Polymeren können zwei verschiedene Glastemperaturen nachgewiesen werden, die sich aber aufeinanderzubewegen.

- Kernspinresonanz-(NMR)-Relaxation:
  Eine sehr empfindliche Methode ist die Bestimmung der Polymermischbarkeit durch NMR-Relaxationszeitmessungen. Im Falle nicht mischbarer Polymere werden die Spin-Spin- bzw. Spin-Gitter-Relaxationszeiten der reinen Polymere gemessen, im Falle mischbarer Polymere treten andere Relaxationszeiten auf.

- sonstige Methoden:
  Andere anwendbare Verfahren, die zur Bestimmung der Mischbarkeit von Polymeren herangezogen werden können, sind Trübungsmessungen, Streumethoden (Lichtstreuung), IR-Spektroskopie und Fluoreszenztechniken (L.A. Utracki "Polymer Alloys and Blends", S. 34 - 42, New York 1989).

Beispiele für miteinander mischbare Polymere sind in verschiedenen Monographien (z.B. J. Brandrup, E.H. Immergut: Polymer Handbook, 3rd Edition, 1989) ausführlich dokumentiert.

Die Herstellung der in den erfindungsgemäßen Polymermischungen enthaltenen Blockcopolymeren (B) und (C) kann nach allgemein bekannten Methoden erfolgen, beispielsweise durch sequentielle anionische Polymerisation (US-A 3 251 905, US-A 3 390 207, US-A 3 598 887, US-A 4 219 627).

Sind nicht alle zwei Monomere in der gewünschten Reihenfolge anionisch polymerisierbar, so kann die Verfahrensweise dahingehend abgeändert werden, daß man nur eines der Monomere polymerisiert und mit anderen Methoden weiterverfährt, z.B. indem man radikalisch oder aber auch kationisch weiterpolymerisiert. Die Übergangsmöglichkeiten von anionischer Polymerisation auf andere Wachstumsmechanismen sind beispielsweise beschrieben in: P. Rempp, E. Franta, J.E. Herz, Advances in Polymer Science 1988, S. 164 - 168.

Auch Monomere, die nur polykondensierbar sind, können in ein solches Zweiblockcopolymeres eingebracht werden, indem beispielsweise einer mit einer funktionellen Endgruppe versehener, durch anionische Polymerisation hergestellter Block bei der Polykondensation zugegeben wird (R.N. Young, R.P. Quirk, L.J. Fetters, Advances in Polymer Science, Vol. 56, S. 70, 1984).

Weiterhin können die A-B-Blockcopolymeren (B) oder B-C-Blockcopolymeren (C) noch durch radikalische Polymerisation mit Hilfe von funktionellen Initiatoren oder Makroinitiatoren hergestellt werden (G. Riess, G. Hurtrez, P. Bahadur "Encyclopedia of Polymer Science and Engineering", Vol. 2, 327 - 330, Wiley & Sons [1985]).

Nachfolgend sind einige Beispiele für solche Blockcopolymere (B) und (C) aufgeführt, die sich für die Zwecke der erfindungsgemäßen mehrphasigen Polymermischungen besonders gut eignen. Dabei versteht es sich aber von selbst, daß die erfindungsgemäßen mehrphasigen Polymermischungen nicht auf solche Polymermischungen beschränkt sind, die die nachfolgend aufgeführten Blockcopolymere (B) und (C) enthalten.

Als Beispiele für besonders geeignete Blockcopolymere (B) und (C) seien u.a. genannt:

A-B-Blockcopolymere (B) mit Polystyrol als Block A, Polybutadien als elastischer Block B, B-C-Blockcopolymere (C) mit einem gleichen elastischen Block B oder Polyisopren als Block B und Polyhexamethylenadipinsäurediamid als Block C. Derartige Blockcopolymere eignen sich vor allem für mehrphasige Polymermischungen aus Polystyrol oder Polyphenylenether als Polymer (A) und Polyamid 66 als Polymer (D).

A-B-Blockcopolymere (B) mit Polystyrol als Block A, Polybutadien als elastischer Block B; B-C-Blockcopolymerisate (C) mit gleichem Block B oder Polyisopren als Block B und Poly-E-caprolacton als Block C. Derartige Blockcopolymere eignen sich insbesondere in einer mehrphasigen Polymermischung mit Polystyrol oder Polyphenylenether als Polymer (A) und Polyester oder Polyvinylchlorid als Polymer (D).

A-B-Blockcopolymere (B) mit Polystyrol als Block A, Polybutadien als elastischer Block B; B-C-Blockcopolymere (C) mit einem gleichen Block B oder Polyisopren als Block B und Poly-E-caprolactam als Block C. Diese Blockcopolymere eignen sich u.a. für mehrphasige Polymermischungen aus Polystyrol oder Polyphenylenether als Polymer (A) und Polyamid 6 als Polymer (D).

A-B-Blockcopolymere (B) mit Polystyrol als Block A, Polybutadien als elastischer Block B; B-C-Blockcopolymere (C) mit einem strukturell identischen Block B oder Polyisopren als Block B und Polyethylenoxid als Block C, vorzugsweise verwendet in mehrphasigen Polymermischungen aus Polystyrol als Polymer (A) und Polyethylenoxid oder Polyoxyphenylensulfonylphenylen als Polymer (D).

A-B-Blockcopolymere (B) mit Polymethylmethacrylat als Block A, Polybutadien als elastischer Block B; B-C-Blockcopolymerisate (C) mit einem strukturell identischen Block B oder Polyisopren als Block B und Polyhexamethylenadipinsäureamid als Block C, vorzugsweise verwendet in mehrphasigen Polymermischungen aus Polymethylmethacrylat, einem Styrol-Acrylnitril-Copolymerisat oder einem ABS-Copolymerisat als Polymer (A) und Polyamid 66 als Polymer (D).

A-B-Blockcopolymere (B) mit Polymethylmethacrylat als Block A, Polybutadien als elastischer Block B; B-C-Blockcopolymere (C) mit einem strukturell identischen Block B oder Polyisopren als Block B und Poly-E-caprolactam als Block C, vorzugsweise verwendet in mehrphasigen Polymermischungen aus Polymethylmethacrylat, einem Styrol-Acrylnitril-Copolymerisat oder einem ABS-Copolymerisat als Polymer (A) und Polyamid 6 als Polymer (D).

Eine weitere Verbesserung der Phasenhaftung kann durch Modifizierung der beiden Blockcopolymere (B) und (C) erzielt werden.

Üblicherweise wird ein unmodifiziertes Blockcopolymer durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam-, Halogenbenzyl- oder 1,2,4-Triazolin-3,5-dion-Gruppe modifiziert.

Das Modifizierungsmittel ist in Mengen bis zu 10, vorzugsweise bis zu 5 Gew.-%, bezogen jeweils auf (B) oder (C), in den Blockcopolymeren nach der Umsetzung enthalten.

Geeignete Modifizierungsmittel sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$- bis $C_8$-Alkanolen, die Mono- oder Diamide dieser Säuren wie N-Phenylmaleinimid, Maleinhydrazid. Weiterhin seien beispielsweise N-Vinylpyrrolidon und (Meth)-acryloylcaprolactam genannt. Eine andere Gruppe von Modifiziermitteln umfaßt beispielsweise das Säurechlorid des Trimethsäureanhydrids, Benzol-1,2-dicarbonsäureanhydrid-4-carbonsäureessigsäureanhydrid, Chlorethanoylsuccinaldehyd, Chlorformylsuccinaldehyd, Zitronensäure und Hydroxysuccinsäure.

Besonders bevorzugtes Modifizierungsmittel ist 1,2,4-Triazolin-3,5-dion selbst oder in 4-Stellung substituierte 1,2,4-Triazolin-3,5-dione der Formel I

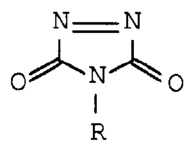

I.

Hierin kann R stehen für einen Alkyl-, Cycloalkyl-, Aryl-, Aralkyl- oder Alkylarylrest mit bis zu 25 C-Atomen, einen 5-bis 8-gliedrigen Heterocyclus mit Stickstoff, Sauerstoff oder Schwefel als Heteroatom oder für $NR^1R^2$, wobei $R^1$ und $R^2$ $C_1$- bis $C_4$-Alkylgruppen und insbesondere Wasserstoff sind.

R kann gegebenenfalls auch einen Alkenyl- oder Alkinylrest mit 2 bis 25 C-Atomen darstellen.

Ganz allgemein wird als R ein Rest bevorzugt, der bis zu 15 C-Atome enthält.

Beispiele für Alkylreste sind Methyl, Ethyl, Propyl, Butyl, Pentyl, Hexyl, Heptyl, Octyl, Nonyl, Decyl, Undecyl, Dodecyl, Neopentyl, 3,5,5-Trimethylhexyl, 3-Methylhexyl, 2-Ethylhexyl und 2,5,5-Trimethylhexyl.

Ein Beispiel für einen Cycloalkylrest ist Cyclohexyl.

Beispiele für Aralkylreste sind Benzyl und Phenethyl.

Unsubstituierte Arylreste sind beispielsweise Phenyl und Naphthyl. Substituierte Arylrest sind Alkylaryl-, Cycloalkylaryl-, arylsubstituierte Alkylaryl- und arylsubstituierte Aryl-Reste.

Beispiele für Alkylarylreste sind o-, p- und m-Tolyl, 2,6- und 2,4-Dimethylphenyl. Trimethylphenyl, o-, p- und m-Isopropylphenyl, Nonylphenyl, p-tert.-Butylphenyl, 2,4-Diisopropylphenyl und Triisopropylphenyl.

Ein Beispiel für einen Cycloalkarylrest ist o-Cyclohexylphenyl. Beispiele für arylsubstituierte Alkylarylreste sind p-Benzylphenyl und p-Phenethylphenyl.

Ein Beispiel für ein arylsubstituiertes Aryl ist Diphenyl.

Bevorzugte Reste sind Phenyl, o-, m-, p-Tolyl und 2,6-Dimethylphenyl, 2,7-Diisopropylphenyl und Triisopropylphenyl, wobei die Verbindungen 4-Methyl- und 4-Phenyl-1,2,4-triazolin-3,5-dion bevorzugt sind.

Besonders bevorzugt ist der Rest R, der seinerseits durch eine oder mehrere funktionelle Gruppen substituiert ist. Beispiele für geeignete funktionelle Gruppen sind Halogen-, Nitril-, Ether-, Nitro-, phenolische OH-, Carbonsäureester-, Carbonsäurehalogenid-, Carbonsäureamid-, Säureanhydrid-, Imid-, Lactam-, Epoxi-, Urethan-, Oxazolin-, Carbonyl-, Thioether-, Sulfonsäureester-, Phosphat- und Aminogruppen; geeignet sind auch Salze von Carboxylgruppen. Beispielhaft seien der 4-Hydroxy-3-nitrophenyl- und der 4-Carboxymethylphenylrest genannt.

Weiterhin kann die Modifizierung auch mit mehr als eine 1,2,4-Triazolin-3,5-dion-Gruppe tragenden Molekülen erfolgen. Dies führt im allgemeinen zu verzweigten bzw. vernetzten Polymeren. Bevorzugt sind Komponenten der Struktur II

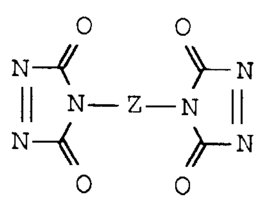

II,

wobei Z ein Brückenglied ist. Als Z gut geeignet ist $-(CH_2)_n-$ mit n = 1 bis 8,

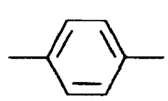

,

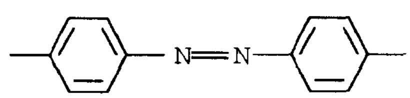

,

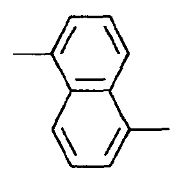

und bevorzugt

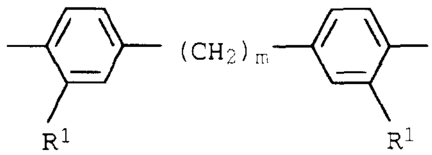

mit m = 2 bis 8, bevorzugt 1
und $R^1$ = H oder $OCH_3$.

Die Verbindungen können beispielsweise gemäß DE-A 32 44 057 und DE-A 27 04 330 bzw. J.J. Stickler, W.H. Pirkle, J. Org. Chem., 31, 3444-45 (1966) bzw. J.A. Moore, R. Muth, R. Sorace, J. Org. Chem., 39, 3799 (1974) hergestellt werden.

Die Umsetzung der Komponenten erfolgt entweder in Substanz, d.h. in der Schmelze von (B) und/oder (C) oder vorzugsweise in Lösung bzw. einer Suspension von (B) und/oder (C) in einem Lösungsmittel für das Modifizierungsmittel. Man sorgt im allgemeinen durch Rühren für eine gute Durchmischung der Reaktionspartner.

Für die Umsetzung besonders geeignete Lösungsmittel sind solche, die sowohl B als auch C und das Modifizierungsmittel lösen, ohne die Modifizierung zu stören. Geeignete Lösungsmittel sind beispielsweise aromatische und chlorierte Kohlenwasserstoffe, Tetrahydrofuran, Ethylacetat oder Dimethylformamid.

Die Umsetzung kann in einem weiten Temperaturbereich von -50°C bis zum Siedepunkt des entsprechenden Lösungsmittels, vorzugsweise zwischen -20°C und +80°C durchgeführt werden.

Bevorzugte mehrphasige Polymermischungen weisen

a) 10 bis 89 Gew.-% des Polymeren (A)
b) 0,5 bis 25 Gew.-% des A-B-Blockcopolymeren (B)
c) 0,5 bis 25 Gew.-% des B-C-Blockcopolymeren (C)
d) 10 bis 89 Gew.-% des Polymeren (D),

auf.

Als bevorzugte Polymere (A) enthalten derartige mehrphasige Polymermischungen 10 bis 89, bevorzugt 10 bis 79 und insbesondere 15 bis 50 Gew.-% eines Polyphenylenethers.

Die Polyphenylenether weisen im allgemeinen ein Molekulargewicht (Gewichtsmittelwert) im Bereich von 10.000 bis 80.000, vorzugsweise von 20.000 bis 60.000 auf.

Dies entspricht einer reduzierten spezifischen Viskosität (ηred) von 0,2 bis 0,9 dl/g, vorzugsweise von 0,35 bis 0,8 und insbesondere 0,45 bis 0,6, gemessen in einer 0,5 gew.%-igen Lösung in Chloroform bei 25°C nach DIN 53 726.

Geeignete Polyphenylenether sind an sich bekannt und werden vorzugsweise durch oxidative Kupplung von in o-Positionen disubstituierten Phenolen hergestellt.

Als Beispiele für Substituenten sind Halogenatome wie Chlor oder Brom und Alkylreste mit 1 bis 4 Kohlenstoffatomen, die vorzugsweise keina-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/ der Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d. h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethoxi-1,4-phenylenether), Poly-(2-chlor-1,4-phenylenether), Poly(2,5-dibrom-1,4-phenylenether). Bevorzugt werden Polyphenylenether eingesetzt,bei denen die Substituenten Alkylreste mit 1 bis 4 Kohlenstoffatomen sind, wie Poly(2,6-dimethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Weiterhin sind Pfropfpolymere aus Polyphenylenether und vinylaromatischen Polymeren auf der Basis von Monomeren wie Styrol, α-Methylstyrol, Vinyltoluol und Chlorstyrol sowie funktionalisierte oder modifizierte Polyphenylenether wie sie z.B. aus WO-A 86/02086, WO-A 87/00540, EP-A-222 246, EP-A-223 116 und EP-A-254 048 bekannt sind, geeignet.

Das Polymer (A) kann bis zu 50 Gew.-%, bevorzugt bis zu 40 Gew.-% durch ein vinylaromatisches Polymer ersetzt werden.

Das vinylaromatische Polymer ist vorzugsweise mit dem als Polymer (A) eingesetzten Polyphenylenether verträglich.

Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Als Blockcopolymere (B) und (C) enthalten die erfindungsgemäßen Polymermischungen 0,5 bis 25, vorzugsweise 1 bis 20, und insbesondere 2 bis 10 Gew.-% eines A-B-Blockcopolymeren und eines B-C-Blockcopolymeren. Das AB-Blockcopolymer ist aufgebaut aus einem Block A und einem elastischen Block B, wobei der Block A mit dem Polymer A verträglich ist. Das B-C-Blockcopolymer ist aufgebaut aus einem elastischen Block B und einem Block C, wobei der Block C mit dem Polymeren D verträglich und mit dem Block A des AB-Blockpolymeren unverträglich ist. Bevorzugt ist der Block A aus vinylaromatischen Monomeren aufgebaut. Konjugierte Diene sind die bevorzugten Monomeren für den Block B und Block C ist bevorzugt aus $C_1$- bis $C_{18}$-Alkylestern der Acrylsäure oder $C_1$-$C_{18}$ Alkylestern der Methacrylsäure oder deren Mischungen aufgebaut.

Unter Blockcopolymeren werden bekanntlich solche Copolymere verstanden, bei denen die unterschiedlichen Monomeren nicht statistisch in der Kette eingebaut sind, sondern in denen homopolymere Kettenabschnitte (Polymerblöcke) der verschiedenen Monomeren miteinander verknüpft sind. Bei Zweiblockcopolymeren der allgemeinen Formel A-B ist der homopolymere Kettenabschnitt A mit dem homopolymeren Kettenabschnitt B eines anderen Monomeren verbunden.

Die A-B-Blockcopolymeren B) zeichnen sich dadurch aus, daß der Block A mit dem Polyphenylenether A) verträglich ist und der Block C des B-C-Blockcopolymeren mit der weiteren Polymerkomponente D) verträglich ist. Unter der Verträglichkeit zweier Polymerkomponenten versteht man im allgemeinen die Mischbarkeit der Komponenten oder die Neigung des einen Polymeren, sich in der anderen Polymerkomponente zu lösen (siehe B. Vollmert, Grundriß der makromolekularen Chemie, Band IV, S. 222 ff, E. Vollmert-Verlag 1979).

Die in den erfindungsgemäßen Polymermischungen enthaltenen Blockcopolymere (B) und (C) weisen vorzugsweise eine Glasübergangstemperatur der Blöcke A und C von größer 0°C, bevorzugt größer 80°C auf. Der Block B hat vorzugsweise eine Glasübergangstemperatur von kleiner 0°C, bevorzugt von kleiner -30°C.

Die Gewichtsverhältnisse der Blöcke, bezogen auf das A-B-Blockcopolymerisat (B), betragen in der Regel:

| | |
|---|---|
| 10 bis 90, vorzugsweise 20 bis 80 | und insbesondere 30 bis 70 Gew.-% des Blockes A, |
| 10 bis 90, vorzugsweise 20 bis 80 | und insbesondere 30 bis 70 Gew.-% des elastischen Blockes B |

Die Gewichtsverhältnisse der Blöcke, bezogen auf das B-C-Blockcopolymerisat (C) betragen in der Regel

| | |
|---|---|
| 10 bis 90, vorzugsweise 20 bis 80 | und insbesondere 30 bis 70 Gew.-% des elastischen Blockes B, |
| 10 bis 90, vorzugsweise 20 bis 80 | und insbesondere 30 bis 70 Gew.-% des Blockes C. |

Im folgenden werden die bevorzugten einzelnen Aufbaukomponenten der Blockcopolymeren beschrieben:

Der Block A besteht aus einem vinylaromatischen Polymeren.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen kommen dabei insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie N,N- oder N-alkylsubstituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren in der Polymermischung ist die Mischbarkeit des Copolymerisates mit dem Polyphenylenether. Solche Mischungsgrenzen sind bekannt und beispielsweise in der US-A 4 360

618, der US-A 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes ($M_w$) von 10.000 bis 500.000, vorzugsweise von 70.000 bis 300.000, die nach üblichen Methoden bestimmt werden können.

Der Block B besteht aus einem Polymeren eines konjugierten Diens mit 4 bis 16 C-Atomen, bevorzugt 4 bis 8 C-Atomen.

Als Beispiele seien 1,3-Pentadien, alkylsubstituierte Diene wie 2,3-Dimethylbutadien oder konjugierte Hexadiene, Heptadiene sowie Octadiene und cyclische Diene wie Cyclopentadien genannt, wobei Butadien und Isopren bevorzugt sind. Es können auch Mischungen der konjugierten Diene zum Aufbau des Blockes B verwendet werden, wobei das Mischungsverhältnis beliebig ist.

Das mittlere Molekulargewicht des Blockes B ist in weiten Bereichen unkritisch. Es hat sich jedoch als vorteilhaft herausgestellt, wenn B ein ungefähr gleiches oder niedrigeres Molekulargewicht wie der Block A oder C aufweist. Das mittlere Molekulargewicht des Polymerblockes B ist beispielsweise durch Differenzbildung der Molekulargewichte von A oder C zum mittleren Molekulargewicht des A-B- bzw. B-C-Blockcopolymeren erhältlich.

Ferner hat es sich als vorteilhaft erwiesen, wenn die Blöcke A oder C ungefähr die gleiche oder eine größere Blocklänge aufweisen wie die Polymere (A) oder (D), mit denen die jeweiligen Blöcke verträglich sind.

Als Monomere, welche den Block C des B-C-Copolymeren bilden, eignen sich $C_1$- bis $C_{18}$-Alkylester der Methacrylsäure oder Acrylsäure oder deren Mischungen.

Als Ester der Acrylsäure verwendet man erfindungsgemäß die $C_1$-$C_{18}$-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Octyl-, 2-Ethylhexyl-, Nonyl-, Decyl-, Lauryl- oder Stearylacrylat, bevorzugt Methylacrylat, n-Butylacrylat und 2-Ethylhexylacrylat, sowie Mischungen dieser Monomeren.

Als Ester der Methacrylsäure verwendet man erfindungsgemäß die $C_1$-$C_{18}$-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Octyl-, 2-Ethylhexyl-, Nonyl-, Decyl-, Lauryl- oder Stearylmethacrylat, bevorzugt Methylmethacrylat, sowie Mischungen dieser Monomeren.

Die Verwendung von hydroxy-, epoxi- und aminofunktionellen Methacrylaten und Acrylaten ist ebenfalls möglich. Hierbei ist es vorteilhaft, die funktionellen Gruppen durch z.B. Trialkylsilylgruppen vor der Polymerisation zu schützen. Derartige Polymerisationsverfahren in Anwesenheit von Schutzgruppen sind bei S. Nakahama et al, Prog. Polym. Sci. Vol. 15, 299-335, 1990 beschrieben.

Als weitere Comonomere kann man bis zu 50 Gew.-%, bevorzugt von 1 bis 20 Gew.-%, der folgenden beispielhaft aufgeführten Monomeren einsetzen:

- Vinylaromaten wie Styrol, alpha-Methylstyrol, Vinyltoluol oder p-tert.-Butylstyrol;
- p-Aminostyrol;
- p-Hydroxystyrol;
- p-Vinylbenzoesäure
- Acryl- und Methacrylsäure;
- Acryl- und Methacrylamid;
- Maleinsäure sowie deren Imide und $C_1$-$C_{10}$-Alkylester;
- Fumarsäure sowie deren $C_1$-$C_{10}$-Alkylester;
- Itaconsäure sowie deren Imide und $C_1$-$C_{10}$-Alkylester;
- Acryl- und Methacrylnitril.

Die Herstellung der Blockcopolymeren (B) und (C) kann nach bekannten Methoden der anionischen Blockcopolymerisation durch sequentielle Addition der Monomeren oder Kopplungstechniken erfolgen. Derartige Verfahren werden z.B. in den US-Patentschriften 3 251 905, 3 390 207, 3 598 887 und 4 219 627 ausführlich beschrieben. Als Initiatoren für die Polymerisation eignen sich alkalimetallorganische Verbindungen, vorzugsweise Lithiumalkyle wie z. B. Methyllithium, Ethyllithium, n- oder s-Butyllithium oder Isopropyllithium. Besonders bevorzugt wird n- oder s-Butyllithium eingesetzt. Als Lösungsmittel für die Polymerisation eignen sich zweckmäßig geradkettige oder verzweigte aliphatische Kohlenwasserstoffe, wie z.B. n-Octan oder n-Hexan, sowie einfache oder substituierte cycloaliphatische und aromatische Kohlenwasserstoffe wie z.B. Cyclohexan, Methylcyclohexan oder Toluol, Benzol sowie jede beliebige Mischung der aliphatischen, cycloaliphatischen und aromatischen Kohlenwasserstoffe. Vorteilhaft wird Cyclohexan als Lösungsmittel verwendet.

Als Lösungsmittelkomponenten sind ferner Ether wie Tetrahydrofuran oder Diethylether sowie tertiäre Amine wie z.B. Tetramethylethylendiamin oder Pyridin in Konzentrationen von 0,01 bis 20, vorzugsweise 0,01 bis 2 Gew.-% geeignet. Bevorzugt ist Tetrahydrofuran.

Alle Einsatzstoffe müssen von sauerstoff- und protonenaktiven Verunreinigungen befreit werden, was z.B. durch

Kontaktieren mit Metallorganylen oder durch adsorptive Reinigung, z.B. Calciumhydrid erfolgen kann. Die Durchführung der Polymerisation erfolgt unter Inertgasbedingungen bei Temperaturen von -100 bis +120°C, vorzugsweise bei -80 bis 80°C. Es wird bei Drücken gearbeitet, bei denen die Monomeren und Lösungsmittel bei der Polymerisationstemperatur nicht verdampfen. Nach beendeter Polymerisation wird das Polymerisationsgemisch mit einer ausreichenden Menge Wasser, Methanol oder Isopropanol versetzt, um die aktiven Endgruppen bzw. überschüssigen Initiator zu desaktivieren.

Im allgemeinen wird so vorgegangen, daß in einer ersten Polymerisationsstufe der vinylaromatische Kohlenwasserstoff zur Bildung des A-Blocks vollständig auspolymerisiert wird, im zweiten Polymerisationsschritt der Dienkohlenwasserstoff zur Bildung des B-Blocks vollständig umgesetzt wird. Dabei entstehen scharfe Übergänge zwischen den einzelnen Blöcken.

Es ist vorteilhaft, das lebende Anion des Polydienblockes mit sterisch gehinderte Gruppen tragende Verbindungen wie Diphenylethylen zu verkappen. Hierdurch wird ein Angriff des Anions auf die Estergruppierung des (Meth)acrylats vermieden und so wie es gewünscht ist, die Reaktion nahezu ausschließlich über die reaktive Doppelbindung der Meth (acrylate) weitergeführt.

Die so erhaltenen Blockcopolymeren (B) und (C) können nach üblichen Verfahren durch Hydrierbehandlung in Polymere übergeführt werden, in denen die aliphatischen ungesättigten Bindungen teilweise abgesättigt sind, d.h. die einen Hydrierungsgrad von 50 bis 100 Gew.-% aufweisen, bevorzugt 70 bis 100 und insbesondere 90 bis 100 Gew.-%.

Es können auch A-B- und B-C-Blockcopolymerisate eingesetzt, welche einen hohen Hydrierungsgrad aufweisen. Setzt man jedoch modifizierte A-B- oder B-C-Blockcopolymerisate ein, ist es vorteilhaft, daß diese einen Restdoppelbindungsgehalt von 1 bis 10 Gew.-% aufweisen (vor der Modifizierung).

Die Hydrierung wird vorzugsweise mit molekularem Wasserstoff und Katalysatoren auf Basis von Metallen oder Metallsalzen der achten Gruppe des Periodensystems durchgeführt. Sie kann in heterogener Phase z.B. mit Raney-Nickel oder bevorzugt in homogener Phase mit Katalysatoren auf Basis von Salzen, insbesondere Carboxylaten, Alkoxiden oder Enolaten des Kobalts, Nickels oder Eisens, die mit Metallalkylen, insbesondere mit Aluminiumalkylen, kombiniert sind oder homogen durch in situ erzeugte Diimine aus z.B. Tosylhydrazid erfolgen. Verfahren zur selektiven Hydrierung von Blockcopolymeren werden u.a. in den US-Patentschriften 3 113 986 und 4 226 952 beschrieben.

Das Polymerisationsgemisch kann zur Isolierung des Polymeren nach bekannten Verfahren wahlweise direkt zur Trockne erhitzt oder mit Wasserdampf behandelt werden, wobei das Lösungsmittel abdestilliert wird. Es kann gleichfalls in einem Überschuß Nichtlösungsmittel wie z.B. Ethanol gefällt und mechanisch abgetrennt und getrocknet oder durch Extruderentgasung aufgearbeitet werden.

Der Restdoppelbindungsgehalt der olefinisch ungesättigten Bindungen wird durch Fourier-Analyse der Infrarotspektren oder durch iodometrische Titration nach Wijs sowie durch $^1$H-NMR-Spektroskopie ermittelt.

Das Gewichtsverhältnis der Monomeren im Blockcopolymeren (B) und (C) kann nach üblichen Methoden bestimmt werden, z.B. durch oxidativen Abbau der unhydrierten Blockcopolymeren mit Osmiumtetroxid und gravimetrischer Analyse, IR-spektroskopisch oder über eine Bestimmung des Brechungsindex.

Das mittlere Molekulargewicht des Blockcopolymeren (B) und (C), worunter im Rahmen dieser Erfindung das Zahlenmittel des Molekulargewichtes verstanden wird, soll größer 10.000, bevorzugt größer 50.000, insbesondere größer als 100.000 sein. Es wird, wie unten beschrieben, durch Gelpermeationschromatographie bestimmt.

Bei der Charakterisierung der Blockcopolymeren (B) und (C) werden die folgenden Methoden verwendet:

Die mittleren Molekulargewichte M und Molekulargewichtsverteilungen (Zahlenmittel $M_n$, Gewichtsmittel $M_w$, U (Uneinheitlichkeit) = $M_w/M_n$-1) werden durch Gelpermeationschromatographie anhand von Eichkurven für Polystyrol (Eichsubstanzen mit sehr enger Molekulargewichtsverteilung: $M_w/M_n$ ca. 1) bei 23°C in 0,125 gew.-%iger Tetrahydrofuranlösung bei einer Durchflußgeschwindigkeit von 1,5 ml/min [vgl. G. Glöckner, "Polymercharakterisierung durch Flüssigkeitschromatographie", Verlag A. Hütig, Heidelberg, 1982] gemessen.

Die chemische Zusammensetzung und Mikrostruktur des elastomeren Mittelblockes B (1,2 bzw. 1,4 Verknüpfung oder cis/trans Anteile des Diens im Block) wird üblicherweise durch $^1$H-NMR-Spektroskopie bestimmt. Die Glasübergangstemperaturen werden anhand dynamisch mechanischer Analyse (Meßfrequenz: 1 rad/s) ermittelt.

Als Polymer (D) enthalten die erfindungsgemäßen Polymermischungen 10 bis 89, vorzugsweise 20 bis 80 und insbesondere 40 bis 80 Gew.-%, bezogen auf das Gesamtgewicht der Polymere (A) bis (D), mindestens ein weiteres Polymer (D), welches von (A), (B) und (C) verschieden ist.

Das Polymer (D) ist mit dem als Polymer (A) verwendeten Polyphenylenether nicht verträglich.

Beispiele für derartige Polymere (D) sind ASA- oder ABS- oder SAN-Polymerisate oder Polymere aus $C_1$ bis $C_{18}$ Alkylestern der (Meth)acrylsäure oder Mischungen derartiger Polymere.

Das Mischungsverhältnis der Polymeren ist über weite Grenzen variierbar; für den Fall der Mischung von (Meth) acrylaten mit ASA, ABS oder SAN ist jedoch zu beachten, daß diese nur bis zu einem Acrylnitrilgehalt bis zu 27 Gew.-% (bis 250°C), bis zu 25 Gew.-% (bis 300°C), bezogen auf den Gesamtgehalt an z.B. ABS, mischbar sind.

Bevorzugte ASA-Polymerisate sind aufgebaut aus einer Weich- oder Kautschukphase aus einem Pfropfpolymerisat aus:

$D_1$ 50 bis 90 Gew.-% einer Pfropfgrundlage auf Basis von

$D_{11}$ 95 bis 99,9 Gew.-% eines $C_2$-$C_{10}$-Alkylacrylats und

$D_{12}$ 0,1 bis 5 Gew.-% eines difunktionellen Monomeren mit zwei olefinischen, nicht konjugierten Doppelbindungen, und

$D_2$ 10 bis 50 Gew.-% einer Pfropfgrundlage aus

D21 20 bis 50 Gew.-% Styrol oder substituierten Styrolen der allgemeinen Formel I oder deren Mischungen, und

$D_{22}$ 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren $D_3$) aus:

$D_{31}$ 50 bis 90, vorzugsweise 55 bis 90 und insbesondere 65 bis 85 Gew.-% Styrol und/oder substituierten Styrolen der allgemeinen Formel I und

$D_{32}$ 10 bis 50, vorzugsweise 10 bis 45 und insbesondere 15 bis 35 Gew.-% Acrylnitril und/oder Methacrylnitril.

Bei der Komponente $D_1$) handelt es sich um ein Elastomeres, welches eine Glasübergangstemperatur von unter -20, insbesondere unter -30°C aufweist.

Für die Herstellung des Elastomeren werden als Hauptmonomere $D_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht $D_{11}$ + $D_{12}$ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $D_1$ sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchen-größenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $D_1$ am Pfropfpolymerisat $D_1$+$D_2$ beträgt 50 bis 90, vorzugsweise 55 bis 85 und insbesondere 60 bis 80 Gew.-%, bezogen auf das Gesamtgewicht von $D_1$+$D_2$.

Auf die Pfropfgrundlage $D_1$ ist eine Pfropfhülle $D_2$ aufgepfropft, die durch Copolymerisation von

$D_{21}$ 20 bis 90, vorzugsweise 30 bis 90 und insbesondere 30 bis 80 Gew.-% Styrol oder substituierten Styrolen der allgemeinen Formel I

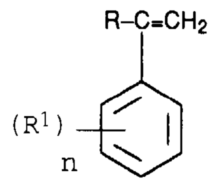

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$D_{22}$ 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- bzw. Methacrylsäureester sind solche, deren Homopolymere bzw. Copolymerisate mit den anderen Monomeren der Komponente $D_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $D_2$ eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle $D_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $D_1 + D_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $D_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat ($D_1$+$D_2$) zählen im Rahmen dieser Erfindung auch die bei der Pfropfmischpolymerisation zur Herstellung der Komponente $D_2$) entstehenden freien, nicht gepfropften Homo- und Copolymerisate.

Nachstehend seien einige bevorzugte Pfropfpolymerisate angeführt:

1:

60 Gew.-% Pfropfgrundlage $D_1$ aus

$D_{11}$ 98 Gew.-% n-Butylacrylat und
$D_{12}$ 2 Gew.-% Dihydrodicyclopentadienylacrylat und

40 Gew.-% Pfropfhülle D2 aus

$D_{21}$ 75 Gew.-% Styrol und
$D_{22}$ 25 Gew.-% Acrylnitril

2:

Pfropfgrundlage wie bei 1 mit 5 Gew.-% einer ersten Pfropfhülle aus Styrol
und
35 Gew.-% einer zweiten Pfropfstufe aus

$D_{21}$ 75 Gew.-% Styrol und
$D_{22}$ 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1

Die als Komponente $D_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von ($D_1$ + $D_2$):$D_3$ liegt im Bereich von 1:2,5 bis 2,5:1, vorzugsweise von 1:2 bis 2:1 und insbesondere von 1:1,5 bis 1,5:1.

Geeignete SAN-Polymere als Komponente D) sind vorstehend (siehe $D_{31}$ und $D_{32}$) beschrieben.

Die Viskositätszahl der SAN-Polymerisate, gemessen gemäß DIN 53 727 als 0,5 gew.-%ige Lösung in Dimethylformamid bei 23°C liegt im allgemeinen im Bereich von 40 bis 100, vorzugsweise 50 bis 80 ml/g.

ABS-Polymere als Polymer (D) in den erfindungsgemäßen mehrphasigen Polymermischungen weisen den gleichen Aufbau wie vorstehend für ASA-Polymere beschrieben auf. Anstelle des Acrylatkautschukes $D_1$) der Pfropfgrundlage beim ASA-Polymer werden üblicherweise konjugierte Diene, wie vorstehend beim Aufbau des Blockes B des AB Copolymerisates beschrieben, eingesetzt, so daß sich für die Pfropfgrundlage $D_4$ vorzugsweise folgende Zusammensetzung ergibt:

$D_{41}$ 70 bis 100 Gew.-% eines konjugierten Diens und
$D_{42}$ 0 bis 30 Gew.-% eines difunktionellen Monomeren mit zwei olefinischen nicht-konjugierten Doppelbindungen

Pfropfauflage $D_2$ und die Hartmatrix des SAN-Copolymeren $D_3$) bleiben in der Zusammensetzung unverändert. Derartige Produkte sind im Handel erhältlich. Die Herstellverfahren sind dem Fachmann bekannt, so daß sich weitere Angaben hierzu erübrigen.

Das Gewichtsverhältnis von ($D_4$ + $D_2$):$D_3$ liegt im Bereich von 3:1 bis 1:3, vorzugsweise von 2:1 bis 1:2.

Als Polymer (D) in den erfindungsgemäßen mehrphasigen Polymermischungen kommt weiterhin ein Polymer aus einem $C_1$-$C_{18}$ Alkylester der (Meth)acrylsäure oder deren Mischungen in Betracht, wie sie vorstehend beim Aufbau des Blockes C des B-C-Blockcopolymeren bereits beschrieben wurden.

Weiterhin können die erfindungsgemäßen Polymermischungen auch übliche Zusatzstoffe und Verarbeitungshilfsmittel enthalten. Der Anteil dieser Zusätze beträgt im allgemeinen nicht mehr als 60, insbesondere nicht mehr als 50 und ganz besonders nicht mehr als 30 Gew.-%, bezogen auf das Gesamtgewicht aus den Polymeren (A) bis (D) und diesen Zusatzstoffen und Hilfsmitteln.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Pigmente kommen z. B. in Frage $TiO_2$ und Ruße.

Bei Verwendung von $TiO_2$ liegt die mittlere Teilchengröße im Bereich von 50 - 400 nm, insbesondere 150 - 240 nm. Techn. Verwendung finden Rutile und Anatas, die gegebenenfalls mit Metalloxiden, z. B. Al-oxid, Si-Oxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 µm und die Oberflächen im Bereich von $10^2$ bis $10^4$ $m^2/g$ (BET/ASTM D 3037) bei DBP-Absorptionen von $10^2$ bis $10^3$ ml/100 g (ASTM d 2414).

Als zusätzliche Flammschutzmittel können insbesondere phosphorhaltige Verbindungen in Mengen bis zu 20 Gew.-%, bevorzugt bis zu 10 Gew.-%, eingesetzt werden. Beispiele hierfür sind Phosphorsäureester, Phosphinsäureester, Phosphinoxide, Phosphor und org. Phosphate, die in Kombination mit einem Triazinderivat oder Polytetrafluorethylen eingesetzt werden können.

Über Art und Menge dieser Zusatzstoffe lassen sich die gewünschten Eigenschaften der Endprodukte in weitem Maße steuern.

Die Herstellung der erfindungsgemäßen mehrphasigen Polymermischungen erfolgt zweckmäßigerweise durch

Mischen der Polymere (A), (B), (C) und (D) bei Temperaturen im Bereich von 200 bis 320°C in üblichen Mischvorrichtungen, wie z. B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Polymere kann variiert werden, es können zwei oder gegebenenfalls drei Polymere vorgemischt sein oder es können auch alle Polymere gemeinsam gemischt werden. Die Herstellung der erfindungsgemäßen Polymermischungen kann auch aus Lösung geeigneter Lösungsmittel erfolgen.

Eine bevorzugte Herstellweise der Polymermischungen erfolgt durch Lösen der einzelnen Polymere in einem organischen Lösungsmittel, z.B. Tetrahydrofuran oder $CHCl_3$/Toluol bei Temperaturen von 20 bis 70, vorzugsweise 30 bis 60°C. Nachdem die einzelnen Polymere gelöst und intensiv gemischt wurden, wird die Mischung mit einem Überschuß eines Alkohols z.B. Methanol gefällt, das Lösungsmittel abgetrennt und die Polymermischung bei erhöhter Temperatur im Vakuum getrocknet.

Die Herstellung der Probekörper erfolgt üblicherweise durch Verpressen der Schmelze in geeigneten Preßformen bei Temperaturen von 200 bis 320°C.

Aus den erfindungsgemäßen Polymermischungen lassen sich ebenso z. B. durch Spritzguß oder Extrusion Formkörper mit einer guten Phasenanbindung herstellen. Diese weisen eine sehr gute Wärmeformbeständigkeit in Kombination mit einer sehr guten Zähigkeit sowie verbesserte Spannungsrißbeständigkeit und Bindenahtfestigkeit auf. Insbesondere zeigen derartige Formkörper eine überaus große Deformationsfähigkeit, bevor der duktile Bruch erfolgt.

Infolge dieses Eigenschaftsspektrums eignen sich die aus den erfindungsgemäßen Polymermischungen herstellbaren Formkörper besonders für Anwendungen im z.B. Automobilbau, Haushaltsbereich, sonstige Bauteile (Gehäuse).

Beispiele

I. Herstellung der Blockcopolymeren

1. Reinigung der Monomeren:

Alle Arbeitsschritte wurden unter Stickstoff ausgeführt.

Styrol:

Die Reinigung von Styrol erfolgte durch Vortrocknen über fein gepulvertem Calciumhydrid. Zur Feinreinigung wurde das Styrol an einer Hochvakuumlinie entgast und umkondensiert. Vor dem Einkondensieren in die Monomerbürette wurden 100 g Styrol mit Dibutylmagnesium versetzt und drei Stunden gerührt.

Butadien:

In einem üblichen Druckgefäß wurden je 100 g Butadien und 10 ml einer 0.5 molaren Lösung von Dibutylmagnesium in Heptan vorgelegt. Das Lösungsmittel wurde im Vakuum entfernt. Das Butadien wurde aus der Vorratsflasche einkondensiert und mindestens drei Stunden bei Raumtemperatur gerührt.

1,1-Diphenylethylen:

1,1-Diphenylethylen wurde mit soviel einer 12%igen Lösung von sekundärem Butyllithium in Cyclohexan/Isopentan versetzt, bis sich die charakteristische tiefrote Farbe des Anions bildete. Die weitere Reinigung erfolgte durch fraktionierte Destillation.

Methylmethacrylat:

Methylmethacrylat wurde über Calciumhydrid vorgetrocknet. Die Feinreinigung erfolgte durch Entgasen und Umkondensieren im Hochvakuum. Vor dem Einkondensieren in die Monomerbürette wurde das Methylmethacrylat mit Triethylaluminium versetzt. Es wurden dabei ca. 5 ml einer 1.0 molaren Lösung von Triethylaluminium in Hexan pro 100 ml Hexan eingesetzt.

Die gereinigten und entstabilisierten Monomeren Styrol und Methylmethacrylat wurden bis zum Verbrauch bei der Temperatur des flüssigen Stickstoffs gelagert.

Reinigung des Lösungsmittels:

Tetrahydrofuran technischer Qualität wurde über 6 Stunden mit fein gepulvertem Calciumhydrid unter Rückfluß gehalten. Danach wurde in eine zweite Destillationsapparatur abdestilliert. Das THF wurde solange mit Kalium am Rückfluß erhitzt, bis die notwendige Reinheit erreicht war. Kriterium war dabei die sofortige Bildung des roten Anions des 1,1-Diphenylethylens bei Zugabe von Butyllithium zu einer Probe des THF, die mit wenig 1,1-Diphenylethylen versetzt wurde.

2. Anionische Polymerisation des A-B-Blockcopolymeren (B)

In einem 6-l-Reaktionsgefäß wurden unter Inertgas 3 1 Cyclohexan vorgelegt und auf 40°C erwärmt. Die Verunreinigungen des Lösungsmittels wurden mit Initiator sek.-Butyl-Lithium-Lösung (1,5 molar) titriert und nach beendeter Titration weitere 1,5 ml der Initiatorlösung zugegeben. Nach Zugabe von 121 g Styrol wurde auf 60°C erwärmt. Nach 2 Stunden war die Polymerisation des Styrolblockes A abgeschlossen.

Die Reaktionsmischung wurde auf 20°C abgekühlt und 121 g Isopren zugegeben. Nach Beendigung der Polymerisation wurde mit Methanol die Reaktion abgebrochen und das Polymere mit Wasser gefällt.

Die Analyse des Blockcopolymeren (B) mittels GPC, NMR und Elementaranalyse ergab ein Gesamtmolekulargewicht von 105.000. Die Zusammensetzung betrug 50 Gew.-% Polystyrol und 50 Gew.-% Polyisopren. Der 1.4. Anteil betrug 88 %.

3. Anionische Polymerisation des B-C-Blockcopolymeren (C)

Unter Inertgas wurde in einem 6-l-Reaktiongsgefäß 3 1 Tetrahydrofuran vorgelegt. Bei -20°C wurden die Verunreinigungen mit einer 1,5 molaren sek.-Butyl-Lithium-Lösung (Initiator) titriert und anschließend 1,5 ml Initiatorlösung zugegeben. 121 g (183 ml) Butadien wurden einkondensiert und im Vorlauf von 6 Stunden polymerisiert. Danach wurden 1,2 ml 1,1-Diphenylethylen zugesetzt (Verkappung des Polybutadien-Blockes) und auf -40°C abgekühlt. 125 g Methylmethacrylat wurden zugegeben und nach 2 Stunden die Reaktion mit geringen Mengen Methanol abgebrochen und das Polymere ausgefällt. Durch Analyse mittels GPC, NMR und Elementaranalyse wurden folgende Werte ermittelt:
Gesamtmolekulargewicht: 110.000
52 Gew.-% Polymethylmethacrylat
48 Gew.-% Polybutadien
1.2. Anteil des Polybutadienblockes: 90 %

II. Herstellung der mehrphasigen Polymermischungen

Es wurden folgende Komponenten eingesetzt:

Polymer (D)

Ein durch kontinuierliche Lösungspolymerisation erhältliches SAN-Copolymerisat aus Styrol und Acrylnitril im Gewichtsverhältnis: 80/20 (VZ: 83 ml/g; gemessen gemäß DIN 53 727 als 0,5 gew.-%ige Lösung in DMF bei 23°C

Polymer (A)

Poly(2,6-dimethyl-1,4-phenylenether) mit einer spezifischen Viskosität (η) von 55 ml/g (1 gew.-%ig in Chloroform bei 23°C gemäß DIN 53 728).

Polymer (B1)

Ein modifiziertes Polystyrolisoprenzweiblockcopolymer (wie unter 2. beschrieben) mit 4 Gew.-% 5-(3,5-Dioxo-1,2,4-triazolin-4-yl)isophthalsäure (erhältlich gemäß der Vorschrift in der Diplomarbeit von J. Hellmann, Johannes-Gutenberg-Universität, Mainz 1991).

Die Modifizierung des Blockcopolymeren wurde wie folgt durchgeführt:

Das Blockcopolymer und das Modifizierungsmittel wurden durch Umfällen gereinigt und getrocknet. Das Modifizierungsmittel (20 g) wurde in trockenem Essigester (200 ml) gelöst. Das Blockcopolymer (500 g) wurde in 5 1 THF gelöst, so daß eine 5 %-Lösung entstand und die Lösung des Modifizierungsmittels zugegeben (bei 20°C). Sobald die Lösung entfärbt war, wurde das modifizierte Polymere in Isopropanol ausgefällt, filtriert und getrocknet.

Polymer (B2)

Ein modifiziertes Polystyrolisoprenzweiblockcopolymer (wie unter 2. beschrieben) mit 4 Gew.-% 4-(3,5-Dioxo-1,2,4-triazolin-4-yl)benzoesäure (erhältlich gemäß der Vorschrift in C. Hilger, R. Stadler Makromolekulare Chemie Vol. 191, S. 1347 ff, 1990).

Die Modifizierung erfolgte analog der Herstellweise wie für Polymer (B1) beschrieben.

Polymer (C1)

Ein modifiziertes Polybutadienmethylmethacrylatzweiblockcopolymer (wie unter 3. beschrieben) mit 4 Gew.-% 5-(3,5-Dioxo-1,2,4-triazolin-4-yl)isophthalsäure.

Die Modifizierung erfolgte analog der Herstellweise wie für Polymer (B1) beschrieben.

Polymer (C2)

Ein modifiziertes Polybutadienmethylmethacrylatzweiblockcopolymer (wie unter 3. beschrieben) mit 4 Gew.-

% 4-(3,5-Dioxo-1,2,4-triazolin-4-yl)benzoesäure.
Die Modifizierung wurde wie bei Polymer (B1) beschrieben durchgeführt.

Herstellung der Polymermischungen:

Die Produkte wurden gemäß den in Tab. 1 angegebenen Mengenverhältnissen auf einem Zweischneckenextruder (ZSK 30, Fa. Werner & Pfleiderer) bei 280°C und 200 U/min konfektioniert. Das Produkt wurde extrudiert, durch ein Wasserbad geleitet, granuliert, getrocknet und zu den entsprechenden Normprüfkörpern verspritzt (280°C).

An den Normprüfkörpern wurde die Durchstoßbarkeit Wg gemäß DIN 53 443 bestimmt.

Die Molekulargewichte und Molekulargewichtsverteilungen ($M_n$ = Zahlenmittel, $M_w$ = Gewichtsmittel, U = $M_w/M_n$ - 1) wurden durch Gelpermeationschromatographie gegenüber Polystyrol-Eichstandards bestimmt (s. Beschreibung). Die chemische Zusammensetzung und die Mikrostruktur des Polybutadien-Mittelblocks wurde durch $^1$H-NMR-Spektroskopie (Gerät: AC 300 der Firma Bruker) bestimmt.

Die Ergebnisse der Messungen und die Zusammensetzung der Formkörper sind der Tabelle zu entnehmen.

Tabelle

| Beispiel | Polymer (A) [Gew.-%] | Polymer (D) [Gew.-%] | Polymer (B1)/(C1) [Gew.-%] | Wg [Nm] |
|---|---|---|---|---|
| 1 | 38 | 58 | 2/2 | 5 |
| 2 | 35 | 55 | 5/2 | 13 |
| 3 | 30 | 50 | 10/10 | 21 |
| 4 *) | 40 | 60 | - | <1 |
| | Polymer (A) [Gew.-%] | Polymer (D) [Gew.-%] | Polymer (B2)/(C2) [Gew.-%] | $W_g$ [Nm] |
| 5 | 30 | 50 | 10/10 | 16 |

*) zum Vergleich

## Patentansprüche

**1.** Mehrphasige Polymermischungen, enthaltend

a) ein Polymer (A) oder eine Mischung des Polymeren A mit bis zu 50 Gew.-% eines vinylaromatischen Polymeren
b) ein A-B-Blockcopolymer (B), aufgebaut aus einem Block A und einem elastischen Block B und
c) ein B-C-Blockcopolymer (C), aufgebaut aus einem elastischen Block B und einem Block C
d) sowie mindestens ein weiteres Polymer (D), welches von (A), (B) und (C) verschieden und mit dem Polymeren (A) unverträglich ist,

wobei die Blöcke A, B und C jeweils voneinander verschieden sind, das Polymer (A) mit dem Block A verträglich und mit dem Block C unverträglich ist, das Polymer (D) mit dem Block C verträglich und mit dem Block A unverträglich ist, wobei der Block B des AB-Blockcopolymeren strukturell sowohl identisch als auch verschiedenartig von dem Block B des BC-Blockcopolymeren sein kann sofern beide Blöcke B miteinander verträglich sind, der elastische Block B eine Glastemperatur unterhalb von +20°C aufweist und die Blöcke A, B und C miteinander unverträglich sind.

**2.** Mehrphasige Polymermischungen nach Anspruch 1, enthaltend

a) 10 bis 89 Gew.-% des Polymeren (A)
b) 0,5 bis 25 Gew.-% des A-B-Blockcopolymeren (B)
c) 0,5 bis 25 Gew.-% des B-C-Blockcopolymeren (C)
d) 10 bis 89 Gew.-% des Polymeren (D).

**3.** Mehrphasige Polymermischungen nach einem der Ansprüche 1 oder 2, wobei der elastische Block B eine Glastemperatur unterhalb von 0°C aufweist.

**4.** Mehrphasige Polymermischungen nach den Ansprüchen 1 bis 3, wobei die Komponenten (B) und (C) durch sequentielle anionische Polymerisation erhältlich sind.

**5.** Mehrphasige Polymermischungen nach den Ansprüchen 1 bis 4, in denen das Polymer (A) ein Polyphenylenether ist, welcher gegebenenfalls bis zu 50 Gew.-% bezogen auf (A) durch ein vinylaromatisches Polymer ersetzt sein kann.

**6.** Mehrphasige Polymermischungen nach Anspruch 5, wobei das A-B-Blockcopolymer (B) aus einem vinylaromatischen Block A und einem konjugierten Dien als Block B aufgebaut ist.

**7.** Mehrphasige Polymermischungen nach den Ansprüchen 5 oder 6, wobei das B-C-Blockcopolymer (C) aus einem konjugierten Dien als Block B und einem Block C aus $C_1$- bis $C_{18}$-Alkylestern der Acrylsäure oder $C_1$- bis $C_{18}$-Alkylestern der Methacrylsäure oder deren Mischungen aufgebaut ist.

**8.** Mehrphasige Polymermischungen nach den Ansprüchen 5 bis 7, in denen die Komponente (D) aus einem ASA- oder ABS- oder SAN-Polymeren oder einem $C_1$- bis $C_{18}$-Alkylester der Methacrylsäure oder deren Mischungen aufgebaut ist.

**9.** Mehrphasige Polymermischungen nach den Ansprüchen 1 bis 8, in denen das A-B-Blockcopolymer (B) oder das B-C-Blockcopolymer (C) oder deren Mischungen gegebenenfalls durch Einbau mindestens einer Carbonyl-, Carbonsäure-, Säureanhydrid-, Säureamid-, Säureimid-, Carbonsäureester-, Carboxylat-, Amino-, Hydroxyl-, Epoxy-, Oxazolin-, Urethan-, Harnstoff-, Lactam-, Halogenbenzyl- oder 1,2,4-Triazolin-3,5-dion-Gruppe modifiziert ist.

**10.** Mehrphasige Polymermischungen nach Anspruch 9, in denen das Modifizierungsmittel in Mengen bis zu 10 Gew.-%, bezogen jeweils auf (B) oder (C), in der Komponente (B) oder (C) enthalten ist.

**11.** Verwendung der mehrphasigen Polymermischungen gemäß den Ansprüchen 1 bis 10 zur Herstellung von Formkörpern.

**12.** Formkörper, erhältlich aus den mehrphasigen Polymermischungen gemäß den Ansprüchen 1 bis 10.

**Claims**

**1.** A multiphase polymer blend containing

a) a polymer (A) or a mixture of the polymer (A) with up to 50% by weight of a vinylaromatic polymer,
b) an A-B block copolymer (B) composed of a block A and a resilient block B and
c) a B-C block copolymer(C) composed of a resilient block B and a block C
d) and at least one further polymer (D) which differs from (A), (B) and (C) and is incompatible with the polymer (A),

wherein the blocks A, B and C are different from one another, the polymer (A) is compatible with the block A and incompatible with the block C, the polymer (D) is compatible with the block C and incompatible with the block A, it being possible for the block B of the AB block copolymer to be structurally either identical to or different from the block B of the BC block copolymer, provided that both blocks B are compatible with one another, and the resilient block B has a glass transition temperature below +20°C and the blocks A, B and C are incompatible with one another.

**2.** A multiphase polymer blend as claimed in claim 1, containing

a) from 10 to 89% by weight of polymer (A)
b) from 0.5 to 25% by weight of the A-B block copolymer (B)
c) from 0.5 to 25% by weight of the B-C block copolymer (C)
d) from 10 to 89% by weight of the polymer (D).

**3.** A multiphase polymer blend as claimed in claim 1 or 2, wherein the resilient block B has a glass transition temperature below 0°C.

4. A multiphase polymer blend as claimed in any of claims 1 to 3, wherein the components (B) and (C) are obtainable by sequential anionic polymerization.

5. A multiphase polymer blend as claimed in any of claims 1 to 4, in which the polymer (A) is a polyphenylene ether, up to 50% by weight, based on (A), of which may be replaced by a vinylaromatic polymer.

6. A multiphase polymer blend as claimed in claim 5, wherein the A-B block copolymer (B) is composed of a vinylaromatic block A and a conjugated diene as block B.

7. A multiphase polymer blend as claimed in claim 5 or 6, wherein the B-C block copolymer (C) is composed of a conjugated diene as block B and a block C comprising a $C_1$-$C_{18}$-alkyl ester of acrylic acid or a $C_1$-$C_{18}$-alkyl ester of methacrylic acid or a mixture thereof.

8. A multiphase polymer blend as claimed in any of claims 5 to 7, in which the component (D) is composed of an ASA or ABS or SAN polymer or a $C_1$-$C_{18}$-alkyl ester of methacrylic acid or a mixture thereof.

9. A multiphase polymer blend as claimed in any of claims 1 to 8, in which the A-B block copolymer (B) or the B-C block copolymer (C) or a mixture thereof is, if required, modified by incorporating at least one carbonyl, carboxyl, anhydride, amido, imido, carboxylic ester, carboxylate, amino, hydroxyl, epoxy, oxazoline, urethane, urea, lactam, halobenzyl or 1,2,4-triazoline-3,5-dione group.

10. A multiphase polymer blend as claimed in claim 9, in which the modifier is present in the component (B) or (C) in amounts of up to 10% by weight, based in each case on (B) or (C).

11. Use of a multiphase polymer blend as claimed in any of claims 1 to 10 for the production of moldings.

12. A molding obtainable from a multiphase polymer blend as claimed in any of claims 1 to 10.

## Revendications

1. Mélanges de polymères à phases multiples, qui contiennent

   a) un polymère (A) ou un mélange du polymère A avec de jusqu'à 50% en poids d'un polymère vinylaromatique,
   b) un copolymère séquencé A-B (B), constitué d'une séquence A et d'une séquence élastique B et
   c) un copolymère séquencé B-C (C) constitué d'une séquence élastique B et d'une séquence C,
   d) ainsi qu'au moins un autre polymère (D) qui diffère de (A), (B) et (C) et qui est incompatible avec le polymère (A),

   où les séquences A, B et C diffèrent les unes des autres, le polymère (A) est compatible avec la séquence A et est incompatible avec la séquence C, le polymère (D) est compatible avec la séquence C et est incompatible avec la séquence A, où la séquence B du copolymère séquencé AB peut être structurellement aussi bien identique à, qu'également différente de la séquence B du copolymère séquencé BC, pour autant que les deux séquences B soient mutuellement compatibles, la séquence élastique B présente une température de transition vitreuse inférieure à +20°C et les séquences A, B et C sont incompatibles les unes avec les autres.

2. Mélanges de polymères à phases multiples, qui contiennent

   a) 10 à 89% en poids du polymère (A),
   b) 0,5 à 25% en poids du copolymère séquencé A-B (B),
   c) 0,5 à 25% en poids du copolymère séquencé B-C (C),
   d) 10 à 89% en poids du polymère (D).

3. Mélanges de polymères à phases multiples suivant l'une quelconque des revendications 1 et 2, où la séquence élastique B présente une température de transition vitreuse inférieure à 0°C.

4. Mélanges de polymères à phases multiples suivant l'une quelconque des revendications 1 à 3, où les composants (B) et (C) peuvent s'obtenir par polymérisation anionique séquentielle.

5. Mélanges de polymères à phases multiples suivant l'une quelconque des revendications 1 à 4, dans lesquels le polymère (A) est un poly(éther de phénylène) qui peut éventuellement être remplacé par jusqu'à 50% en poids, par rapport à (A), d'un polymère vinylaromatique.

6. Mélanges de polymères à phases multiples suivant la revendication 5, où le copolymère séquencé A-B (B) est constitué d'une séquence vinylaromatique A et d'un diène conjugué à titre de séquence B.

7. Mélanges de polymères à phases multiples suivant l'une quelconque des revendications 5 et 6, où le copolymère séquencé B-C (C) est constitué d'un diène conjugué à titre de séquence B et d'une séquence C en esters alkyliques en $C_1$ à $C_{18}$ de l'acide acrylique ou en esters alkyliques en $C_1$ à $C_{18}$ de l'acide méthacrylique, ou de leurs mélanges.

8. Mélanges de polymères à phases multiples suivant l'une quelconque des revendications 5 à 7, dans lesquels le composant (D) est constitué d'un polymère ASA ou ABS ou SAN ou d'un ester alkylique en $C_1$ à $C_{18}$ de l'acide méthacrylique ou de leurs mélanges.

9. Mélanges de polymères à phases multiples suivant l'une quelconque des revendications 1 à 8, dans lesquels le copolymère séquencé A-B (B) ou le copolymère séquencé B-C (C) ou leurs mélanges sont éventuellement modifiés par l'incorporation d'au moins un radical carbonyle, acide carboxylique, anhydride d'acide, amide d'acide, imide d'acide, ester d'acide carbonique, carboxylate, amino, hydroxyle, époxy, oxazoline, uréthanne, urée, lactame, halogénobenzyle, ou 1,2,4-triazoline-3,5-dione.

10. Mélanges de polymères à phases multiples suivant la revendication 9, dans lesquels l'agent modificateur est contenu dans le composant (B) ou (C) en proportions allant jusqu'à 10% en poids, chaque fois par rapport à (B) ou (C).

11. Utilisation des mélanges de polymères à phases multiples suivant l'une quelconque des revendications 1 à 10, pour la fabrication d'articles moulés.

12. Articles moulés que l'on peut obtenir à partir des mélanges de polymères à phases multiples suivant l'une quelconque des revendications 1 à 10.